# FASCICULE DE BREVET EUROPEEN

(11) **EP 1 946 255 B1**
(45) Date de publication et mention de la délivrance du brevet: **19.05.2010**
(21) Numéro de dépôt: 06807433.5
(22) Date de dépôt: 20.10.2006
(51) Int. Cl.: G06Q 10/00, B65G 15/00

(54) **DISPOSITIF D'AUTOMATISATION D'UNE CHAINE DE DISTRIBUTION DE PLATEAUX REPAS**
EINRICHTUNG ZUM AUTOMATISIEREN EINER VERTEILUNGSKETTE FÜR ESSENSTABLETTS
DEVICE FOR AUTOMATING A DISTRIBUTION CHAIN FOR MEAL TRAYS

(30) Priorité: 20.10.2005 FR 0510722
(43) Date de publication de la demande: 23.07.2008
(73) Titulaire: Société d'Exploitation HOPI CAAP (SEHC) Sarl, 81100 Castres (FR)
(72) Inventeur: Bouëtard, Joël, 81100 Castres (FR)
(74) Mandataire: Ravina, Bernard
(86) Numéro de dépôt international: PCT/EP2006/067617
(87) Numéro de publication internationale: WO 2007/045687

(56) Documents cités:
- US-A- 4 323 110
- US-A- 5 052 548
- US-A1- 2005 080 650

## Description

### Domaine technique

La présente invention concerne un procédé et un dispositif d'automatisation d'une chaîne de distribution de plateaux repas et de récupération de barquettes. Elle s'applique, en particulier à la distribution de repas en collectivité, en restauration collective, plus particulièrement en milieu hospitalier.

Par plateau repas, il faut entendre tout type de contenant apte à recevoir un ou plusieurs repas.

### Etat de la technique

L'organisation des chaînes de constitution de plateau repas s'articule autour d'un tapis convoyeur de plateaux, au regard d'îlots techniques assurant la dépose des composants du repas. Chaque îlot nécessite la présence d'au moins un agent posté. Par exemple, pour les structures de moyenne importance, une chaîne d'assemblage de plateaux se compose des postes suivants :
- un poste de dépose de plateau,
- un poste « légumes »,
- un poste « viande »,
- un poste « hors d'oeuvres »,
- un poste desserts et,
- un poste chargement.

Ainsi, sept agents peuvent être mobilisés entre une et deux heures, deux fois par jour, ce qui représente une charge financière importante pour la structure. De plus, de nombreuses erreurs ou oublis se produisent et représentent un coût et une charge de travail supplémentaire, un désagrément pour le destinataire du plateau et un non respect des composants du repas liés aux pathologies. De plus, l'allotissement des repas pour les unités en multi-portions (une barquette peut contenir plusieurs portions pour plusieurs patients) ajoutent des coûts et charges de travail supplémentaires.

On connaît du brevet US 4 323 110 (RUBBRIGHT) une unité de préparation de plateaux repas pour des patients d'un hôpital. Les plateaux sont préparés manuellement.

### Divulgation de l'invention

La présente invention vise à remédier à ces inconvénients par la mise en oeuvre de modules assurant le fonctionnement automatisé d'un ou plusieurs postes.

À cet effet, la présente invention vise, selon un premier aspect, un dispositif d'automatisation de chaîne de distribution de plateaux repas, **caractérisé en ce qu'**il comporte :
- une pluralité de plateaux munis, chacun, d'un moyen d'identification, comportant une étiquette électronique
- une pluralité de chariots.
- une chaîne de convoyage des plateaux adaptée à garnir les plateaux de composants de repas et
- un système informatique adapté à associer les plateaux à l'aide des étiquettes electroniques aux chariots pour que chaque plateau soit transporté, dans un chariot, jusqu'à son destinataire.

Selon des caractéristiques particulières, le système informatique est adapté à remplir des chariots en minimisant le nombre de destinations de chaque chariot.

Selon des caractéristiques particulières, le système informatique est adapté à choisir les contenus des plateaux pour qu'une succession de plateaux soit destinés au même service destinataire.

Selon des caractéristiques particulières, chaque étiquette électronique comporte une mémoire réinscriptible.

Grâce à chacune de ces dispositions, les plateaux peuvent être identifiés à distance et associés à des destinataires.

Selon des caractéristiques particulières, le système informatique est adapté à associer chaque plateau à un destinataire et chaque destinataire à une liste de composants à mettre sur le plateau.

Selon des caractéristiques particulières, le système informatique est adapté à associer une carte patient, qui identifie, notamment, les nom et prénom du patient, sa chambre, son lit, son régime alimentaire et/ou le menu choisi à chacun des plateaux.

Selon des caractéristiques particulières, la chaîne de convoyage comporte au moins un lecteur de moyens d'identification des plateaux en communication avec au moins un automate.

Selon des caractéristiques particulières, la chaîne de convoyage est dotée d'automates de distribution de composants sur les plateaux et de moyen de détection d'arrivée de chaque plateau en regard desdits automates, la distribution des composants étant synchronisée en fonction de l'arrivée des plateaux en regard de l'automate.

Selon des caractéristiques particulières, la chaîne de convoyage est dotée d'au moins un poste de rattrapage comportant un écran d'affichage et le système informatique est adapté à afficher, pour au moins une partie des plateaux, au moins un identifiant de composant à placer sur le prochain plateau arrivant audit poste de rattrapage.

Selon des caractéristiques particulières, le dispositif tel que succinctement exposé ci-dessus comporte des bornes de communication avec des chariots de transport de plateaux et le système informatique est adapté à transmettre auxdits chariots des informations représentatives de leurs chargements.

Selon des caractéristiques particulières, chaque chariot est adapté à effectuer une remise en température des plateaux en fonction des informations représentatives de son chargement.

Selon des caractéristiques particulières, le dispositif tel que succinctement exposé ci-dessus comporte un moyen de chargement automatique de chariots.

Selon des caractéristiques particulières, le dispositif tel que succinctement exposé ci-dessus comporte un moyen de changement de chariot adapté, lorsqu'un chariot est rempli, à mettre en place un chariot vide.

Selon des caractéristiques particulières, le dispositif tel que succinctement exposé ci-dessus comporte un moyen de mémorisation de chaque plateau dans chaque chariot.

Selon des caractéristiques particulières, le système informatique est adapté à récupérer un plateau sur un chariot en cas de modification d'affectation du patient.

Selon des caractéristiques particulières, le dispositif tel que succinctement exposé ci-dessus comporte un moyen de récupération de barquettes et un moyen de lavage des barquettes récupérées.

### Brève description des dessins

D'autres avantages, buts et caractéristiques de la présente invention ressortiront de la description qui va suivre, faite, dans un but explicatif et nullement limitatif en regard des dessins annexés, dans lesquels :

- la figure 1 représente, schématiquement, en vue de dessus, un mode de réalisation particulier d'une chaîne de constitution de plateaux repas conforme à la présente invention,

- la figure 2 représente, schématiquement, en coupe, un automate de dépose de barquette pouvant être incorporé à la chaîne de constitution de plateaux repas illustrée en figure 1,

- la figure 3 représente, schématiquement, en coupe, un automate de dépose de fruits ronds ou de produits préemballés pouvant être incorporé à la chaîne de constitution de plateaux repas illustrée en figure 1,

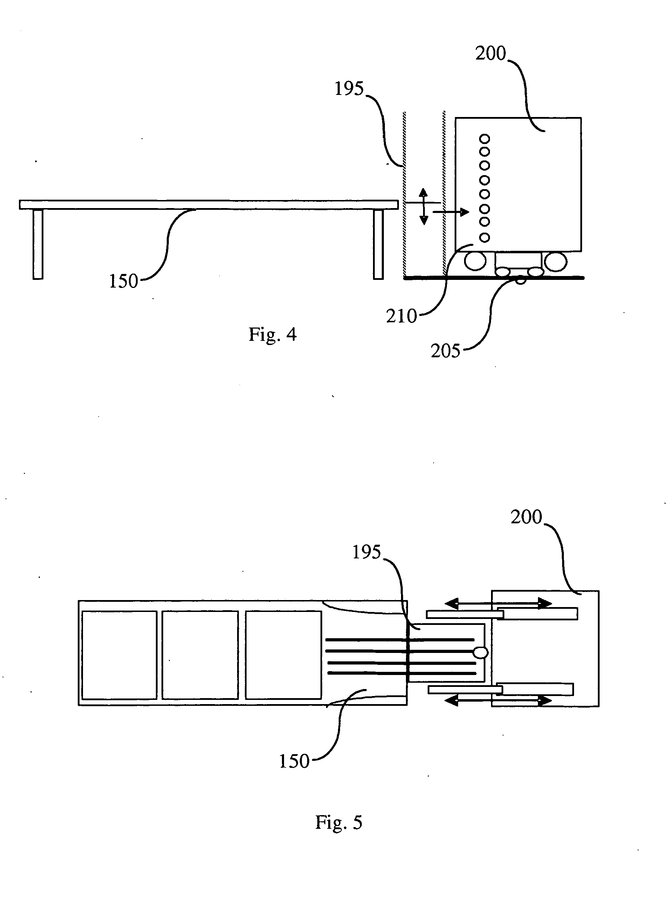

- la figure 4 représente, schématiquement, en coupe, un poste de chargement de chariot d'une chaîne de constitution de plateaux repas,

- la figure 5 représente, schématiquement, en vue de dessus, le poste de chargement de chariot d'une chaîne de constitution de plateaux repas illustré en figure 4,

- la figure 6 représente, schématiquement, en vue de dessus, un module additionnel de récupération de matière.

### Meilleur mode de réalisation de l'invention

Tel que représenté le dispositif d'automatisation de chaîne de distribution 100 de plateaux repas 115, comporte une pluralité de plateaux 115 munis, chacun, d'un moyen d'identification, une chaîne de convoyage 150 des plateaux adaptée à garnir les plateaux de composants de repas, une pluralité de chariots 200 de transport des plateaux repas garnis vers leur destinataire, et un système informatique adapté à associer les plateaux aux chariots pour que chaque plateau soit transporté, dans un chariot, jusqu'à son destinataire.

La chaîne de convoyage 150, sans que cela soit limitatif, pourra comporter un convoyeur linéaire à élément sans fin de réception des plateaux, tendu entre un rouleau mené et un rouleau menant entraîné par un organe moteur électrique qui peut être un moteur du type pas à pas. L'élément sans fin peut être constitué un tapis sans fin, par une pluralité de courroies sans fin disposées parallèlement en tension entre le rouleau menant et le rouleau mené. Ce convoyeur est destiné au transport des plateaux depuis une zone de chargement des plateaux vide à garnir vers une zone de déchargement des plateaux garnis. Le long de ce convoyeur la chaîne sera équipée de postes de garnissage des plateaux constitués chacun par un ou plusieurs automates de distribution de composants 145 de garnissage des plateaux, ces composants étant des produits alimentaires mais pouvant être aussi des couverts, des serviettes de table jetables, des gobelets et autres ustensiles nécessaires à la consommation du repas.

Chaque plateau 115 est doté d'un moyen d'identification, par exemple une étiquette électronique, par exemple de type RFID (acronyme de RadioFrequence IDentification pour identification radiofréquence), posée sur, solidarisée avec, noyée ou incrustée dans le plateau. Chaque plateau 115 est ainsi identifiable par des lecteurs d'étiquettes électroniques de type connu. En variante, c'est la carte plateau qui est équipée du moyen d'identification, par exemple une étiquette électronique radiofréquence comportant, éventuellement une mémoire réinscriptible, c'est alors l'étiquette électronique de la carte plateau qui est lue et permet l'identification du plateau 115.

Selon une variante d'exécution, le convoyeur que comporte la chaîne de convoyage est pourvu d'emplacements dédiés pour la réception des plateaux et les moyens d'identification des plateaux 115 pourront être constitués par des étiquettes électroniques intégrées aux emplacements dédiés à la réception des plateaux. Il va de soi que tout autre organe d'identification pourra être utilisé. Les étiquettes électroniques pourront comporter chacune une mémoire réinscriptible. Dans ce cas de figure les plateaux pourront comporter aussi un moyen d'identification qui peut être du type de celui décrit précédemment ou plus simplement être constitué d'un ticket imprimé comportant les inscriptions nécessaires à l'identification et du plateau et du patient destinataire.

Une fois garnis, les plateaux sont conditionnés dans des chariots 200.

Chaque chariot 200 est identifié, par exemple par une étiquette électronique ou par l'intermédiaire d'une mémoire réinscriptible, par exemple à distance, par une borne à communication hertzienne (par exemple WIFI ou Bluetooth), les moyens électroniques nécessaires, bien connus de l'homme du métier, n'étant pas détaillés ici. Dans ce dernier cas, un système informatique central est adapté à inscrire des données d'identification et/ou de transfert dans la mémoire réinscriptible du chariot 200. Un système d'affichage intégré au chariot permet l'affichage de ces données.

Le positionnement des plateaux 115 dans le chariot 200 est induit par le système informatique à partir d'une logique formatée en fonction des chambres du service et de la distribution dans les couloirs. Les ordres de positionnement sont donc construits au départ de la distribution des plateaux et en tenant compte de la logique de remplissage des chariots.

Ce formatage permet de n'avoir qu'un contrôle embarqué sur l'automate de chargement 195 : la lecture des informations relatives au positionnement (niveau du chariot) et à leur contrôle avec les ordres fournis par le système informatique.

Chaque niveau, ou étage, du chariot 200 est doté d'un repère lisible, par exemple à étiquette électronique, qui associe une plaque de chauffage ou une cellule de remise en température à un plateau 115 lui-même associé à un plat afin de permettre d'optimiser le programme de remise en température avant distribution. Le repérage d'un plateau 115 dans un chariot 200, y compris le niveau où il se trouve dans le chariot, permet aussi la récupération d'un chariot 200 puis d'un plateau 115 puis la recharge d'un autre plateau 115 dans le chariot 200, en cas de réaffectation d'un patient ou d'un régime à un patient.

Le système informatique centralisé assure les fonctions suivantes :
- la gestion du fichier des patients et des demandes,
- l'association d'une carte patient (qui identifie, notamment, les nom et prénom du patient, sa chambre, son lit, son régime alimentaire, le menu choisi) et de sa demande à un plateau,le choix du chariot 200,
- le repérage du plateau 115 sur la chaîne de constitution de plateaux 100,
- la gestion des chargeurs de composants de repas des automates de la chaîne de convoyage 150 et de leurs marchandises,
- la commande des automates 120, 125, 135, 140 de distribution de composants du repas,
- la gestion des plateaux 115 en circuit de rattrapage 130,
- l'affichage des besoins du plateau en chargement sur un poste de rattrapage 130, c'est-à-dire un poste non automatisé,
- le repérage de chaque chariot 200 au-dessus d'un point de centrage 205 et l'ordre de transfert à l'automate de transfert 210 (connu sous le nom de « tortue » ou « tal », acronyme de transport automatisé lourd),
- la gestion des niveaux de chargement de chaque chariot 200 et leur association avec l'identifiant des plateaux 115 correspondants,
- le transfert, par l'intermédiaire d'une borne à communication hertzienne, de données, par exemple les informations de chargement pour l'optimisation du cycle de remise en température (par exemple, si un patient est en cours d'examen, le réchauffage des plats de son plateau peut être différé),
- la récupération de chariot 200, de plateau 115 et de barquettes 145 pour lavage des barquettes 145 et récupération de chaque barquette 145 ou de son matériau de constitution, par exemple du polypropylène.

Lors de la détection de l'absence d'étiquette électronique sur un chariot 105 de chargement des plateaux, on considère qu'il n'y a plus de plateau sur ce chariot 105 et les automates 120, 125, 135 et 140 de la chaîne de convoyage 150 des plateaux 115 sont mis en veille. Inversement, la présentation d'un chariot 105 chargé de plateaux 115 couplé à une validation de reprise de fonctionnement relance les automates 120, 125, 135 et 140.

En entrée de la chaîne de convoyage 150, un automate 110, par exemple à ventouses assure la prise d'un plateau 115 dans une pile de plateaux d'un chariot à niveau constant 105 et la dépose du plateau 115 sur la chaîne de convoyage 150.

Préférentiellement la chaîne de convoyage 150 sera équipée d'une informatique dédiée faisant partie du système informatique du dispositif. Cette informatique constituée par exemple d'un micro ordinateur et de logiciel appropriés pourra être programmée des compositions des plateaux repas à préparer.

Afin que les plateaux 115 suivent un bon alignement sur la chaîne de convoyage 150, un centrage par double balayage latéral (deux bras, par exemple pneumatiques, viennent pincer latéralement le plateau et l'alignent sur le convoyeur) est prévu en entrée de la chaîne de convoyage 150. Par exemple, une double glissière calibrée au format du plateau (préférentiellement sa largeur) aligne ses bords sur les bordures de la chaîne de convoyage 150.

Ainsi, deux centreurs mus perpendiculairement à la chaîne de convoyage et au plan des plateaux poussent le plateau vers le centre du convoyeur, sous le contrôle d'un automate asservi à l'automate de dépose des plateaux 110 ou au repérage de l'arrivée du plateau, par exemple par cellule de détection optique, mécanique ou à lecture d'étiquette électronique 107. Dans ce dernier cas, préférentiel, un lecteur d'étiquettes électroniques 107 placé à proximité de l'entrée de la chaîne de convoyage 150, par exemple en dessous, vérifie que l'étiquette électronique du plateau est lisible. Si elle n'est pas lisible, on arrête la chaîne de convoyage 150 et on déclenche une alarme afin que le plateau 115 défectueux soit retiré.

L'identification du plateau est transmise par ce lecteur 107 au système informatique. Le système informatique associe cette identification à une carte patient et génère immédiatement une série d'ordres ou requêtes, notamment à destination des automates 120, 125, 135 et 140 de la chaîne de convoyage 150, le déclenchement des actions requises étant subordonné à la détection du plateau 115 en question en regard des automates 120, 125, 135 et 140 sur la chaîne de convoyage 150. Ces requêtes sont conservées par les automates en question. La gestion des associations peut aussi être assurée, au fur et à mesure du déplacement du plateau 115 par le système informatique. Dans ce cas, la détection d'un plateau 115 sur une borne de lecture de la chaîne de convoyage 150, elle-même associée à au moins un automate en amont de l'automate, déclenche une autre requête à destination de l'automate concerné.

Au poste suivant l'automate 110, un automate imprime et dépose sur le plateau une carte plateau qui décrit, sous forme de texte, les composants du repas correspondant au plateau. Cette carte plateau sert pour un contrôle en cas d'anomalie du système, pour contrôle lors de la distribution des plateaux dans les services et pour informer le patient sur la composition de son repas. Comme on l'on indiqué ci-dessus, en variante, cette carte plateau comporte une étiquette électronique comportant une mémoire réinscriptible. Chaque étiquette électronique reçoit et conserve alors des informations concernant les constituants du repas qui doivent être déposés sur le plateau 115 qui lui est associé. Dans ce cas, c'est le contenu de la carte plateau qui provoque, au moment de sa lecture par une borne de lecture, en amont d'au moins un automate, le fonctionnement de cet automate.

Aux postes suivants l'automate de dépose de cartes plateaux, des automates 120, 125, 135 et 140 déposent les barquettes 145 de viande et de légumes ou tout autre composant du repas. Ces automates 120, 125, 135 et 140 sont, par exemple, des automates rotatifs à chargeurs, des automates en ligne ou des automates perpendiculaires à la chaîne de convoyage, munis d'une ligne de transfert. Ils conservent, dans chacun de leurs chargeurs, plusieurs barquettes contenant le même composant, le système informatique gérant automatiquement les chargeurs identifiés et associés aux composants de repas qu'ils contiennent.

Préférentiellement, un lecteur d'étiquettes électroniques fournit l'identification du plateau à l'automate, et celui-ci valide la correspondance entre le contenu de la barquette 145 à déposer et le plateau 115 en question, avant de placer la barquette 145 sur le plateau 115, afin d'éviter les risques d'erreur d'affectation, en particulier dans le cas des repas diététiques lourds. En variante, l'information concernant la référence du plateau 115 est fournie au système informatique qui déclenche alors une requête destinée à l'automate 120, 125, 135 ou 140, suivant le lieu de détection, sur la chaîne de convoyage 150. En variante, dans le cas où les étiquettes électronique des plateaux comportent une mémoire réinscriptible, c'est le contenu de la mémoire réinscriptible qui déclenche la requête à destination de l'automate concerné pour que celui-ci sélectionne et dépose la barquette concernée.

En variante, un lecteur de codes à barres lit une étiquette à code à barre sur la barquette 145 à placer sur le plateau 115 et l'automate valide la correspondance entre le contenu de la barquette 145 et le plateau 115 en question, avant de placer la barquette 145 sur le plateau 115, afin d'éviter les risques d'erreur d'affectation. Cette variante fournit un deuxième niveau de contrôle et de sécurité.

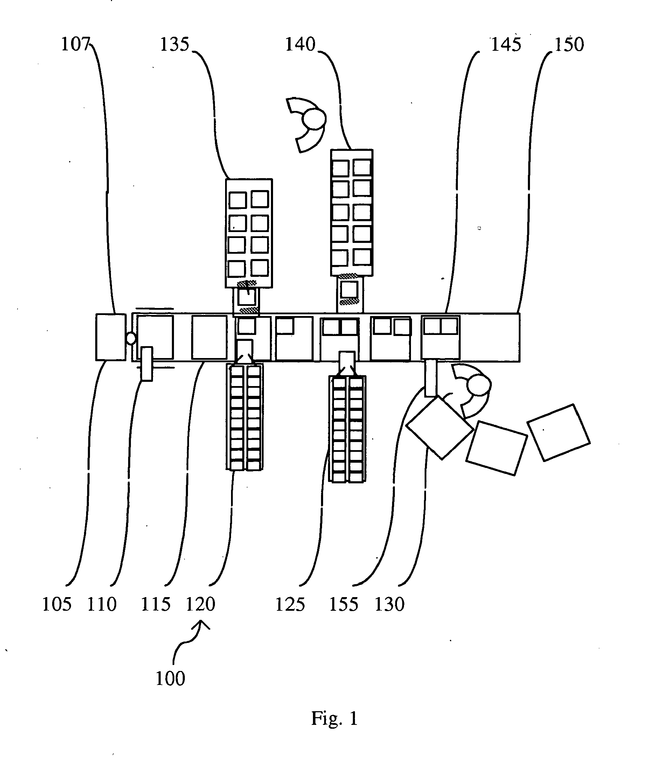

Les automates perpendiculaires 120, 125, 135 et 140 illustrés en figure 1 présentent l'avantage d'une modularité importante, de la possibilité d'intégrer autant de chargeurs que nécessaire et d'intégrer des moyens connus.

Ces automates 120, 125, 135 et 140 combinent, chacun, une ligne de translation par famille de produit et un ensemble de chargeurs fixes et linéaires. À partir des requêtes transmises par le système informatique ou générées à partir des contenus de mémoires réinscriptibles d'étiquettes électroniques associées aux plateaux 115, les séquences de déstockage des produits sont programmées par les automates 120, 125, 135 et 140. En fonction de l'importance de la chaîne de convoyage 150 et du nombre de chargeurs, un nombre de six séquences programmables est typique. Dans le mode de réalisation représenté en figure 1, les automates 120, 125, 135 et 140 repèrent la demande concernant un plateau-repas 115, trois plateaux avant la dépose, déstockent la barquette concernée sur le premier tapis large destiné à couvrir la totalité des chargeurs, c'est-à-dire longer les deux lignes de chargeurs se trouvant de part et d'autre de la chaîne de convoyage, deux plateaux avant la dépose. Des centreurs positionnent ensuite la barquette à l'entrée du tapis de translation dimensionné à la largeur standardisée des barquettes et la barquette y est mise en attente du transfert sur le plateau-repas de la barquette précédente. Un plateau avant la dépose, la barquette 145 est libérée et reste bloquée sur le tapis de translation jusqu'à ce qu'arrive le plateau-repas 115 qui lui correspond, en regard de la sortie du tapis de translation (la détection de ce plateau est préférentiellement effectuée par un lecteur d'étiquettes électroniques). On observe que le positionnement de la sortie des tapis de translation assure la dépose de la barquette dans la zone du plateau-repas qui lui est dédiée, le tapis pouvant être à projection, c'est-à-dire pouvant amener l'élément de repas au-dessus du plateau 115, pour effectuer une dépose au centre ou de l'autre côté du plateau 115.

Les chargeurs des automates 120, 125, 135 et 140 étant statiques, l'approvisionnement durant le fonctionnement est simplifié.

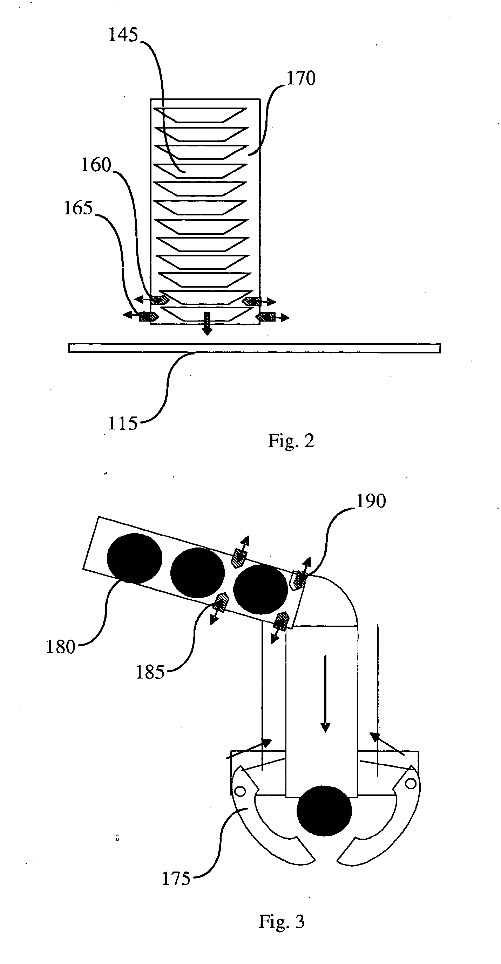

Comme on l'observe en figure 2, un automate de dépose de barquettes peut aussi être constitué d'un réservoir vertical 170 muni de deux ensembles de pinces 160 et 165 capables de bloquer le déplacement vertical des barquettes 145 sous l'effet de leur poids. La distribution est alors effectuée comme suit. Dans un premier temps, les pinces supérieures 160 et inférieures 165 sont fermées et bloquent, respectivement, une colonne de barquettes 145 et une barquette 145. Dans un deuxième temps, les pinces inférieures 165 sont ouvertes et libèrent la barquette inférieure 145 sur le plateau-repas 115 qui se trouve en regard de l'automate. Dans un troisième temps, les pinces inférieures 165 sont refermées. Dans un quatrième temps, les pinces supérieures 160 sont ouvertes et la colonne de barquettes 145 descend de l'épaisseur d'une barquette 145 jusqu'à ce que la barquette inférieure soit en appui sur les pinces inférieures 165. Puis les pinces supérieures 160 sont refermées et on retourne au premier temps.

La figure 3 représente, schématiquement, en coupe, un automate de dépose de fruits ronds 180 ou de produits préemballés pouvant être incorporé à la chaîne de constitution de plateaux repas illustrée en figure 1. Les pinces supérieures 185 et inférieures 190 sont commandées de la même manière qu'exposé ci-dessus en regard de la figure 2. L'ouverture d'une pince d'extrémité 175 est commandée lors de l'arrivée en position adéquate d'un plateau 115.

Une cellule de détection placée entre les pinces supérieures 160 et inférieures 165 signale l'absence de barquette 145 et si un chargeur relais à été prévu, il lui est transmis un ordre de début de déchargement.

Aux postes suivants, les automates 135 et 140 de distribution de hors d'oeuvres, de desserts lactés, de produits préemballés et/ou de fruits, fonctionnement de la même manière que les automates 120 et 125 de distribution de barquettes de viande ou de légumes.

Selon une variante d'exécution, chaque automate de distribution de composants 145 comprend d'une part un magasin par exemple sous forme de tourelle verticale motorisée en rotation autour d'un axe vertical, cette tourelle verticale comportant un ou plusieurs étages de stockage des composants 145 lesquels sont identifiés par un code apposé sur leur emballage et d'autre part un bras manipulateur multi-axes, motorisé, doté d'un lecteur apte à lire les codes d'identification des composants et d'un préhenseur d'extrémité, ledit bras manipulateur étant apte à saisir avec le préhenseur qu'il comporte un des composants dans le magasin associé et déposer le dit composant sur le plateau porté par la chaîne de convoyage. Le lecteur peut être une caméra ou autre système.

En cas de besoin, la chaîne de convoyage 150 comporte au moins un poste de rattrapage 130, c'est-à-dire des postes non automatisés, auxquels un agent effectue la dépose de composants de repas sur les plateaux 115. Chaque poste de rattrapage 130 est muni d'un écran 155 dont l'affichage est commandé par le système informatique et indique le ou les composant(s) à poser manuellement dans le prochain plateau 115 à venir. En option, un lecteur de code à barres permet de vérifier le respect des instructions affichées.

Le système informatique commande la constitution des plateaux 115 service par service, de manière à permettre le chargement des chariots 200 afin que chacun des chariots 200 correspondent à un minimum de services différents. Chaque fois que le chargement d'un chariot 200 doit être interrompu, manuellement ou automatiquement, le système informatique fournit une information permettant cette interruption de chargement. Par exemple, dans le cas d'un chargement manuel, il fait arrêter la chaîne de convoyage 150 et s'allumer un voyant demandant le positionnement d'un chariot vide en sortie de chaîne de convoyage 150, le redémarrage s'effectuant après validation par l'opérateur.

Eventuellement, un poste de sortie fournit des informations de destination au chariot, identifiant les plateaux destinés à chaque service destinataire du chariot 200, par exemple sous la forme d'une feuille imprimée qui est placée sur le chariot 200 chargé, par l'opérateur ou automatiquement ou sous la forme d'un enregistrement dans une mémoire réinscriptible du chariot 200.

Dans le cas où le chargement des chariots 200 est automatique, le système informatique commande le changement de chaque chariot 200 et associe les informations de destination au chariot 200 chargé, comme décrit ci-dessus.

La gestion des chariots 200 est préférentiellement automatisée. À cet effet, des chariots 200 vides sont gardés dans un espace dédié spécifique, appelé « stockage des chariots vides », et les chariots 200 chargés de plateaux sont également gardés dans un espace dédié spécifique, appelé « gare de départ des chariots », avant leur transport vers les services.

La chaîne de convoyage 150 est préférentiellement située entre ces deux espaces. Chacun des chariots 200 est communiquant pour recevoir des informations ou requêtes du système informatique. Les chariots 200 sont munis d'un afficheur, par exemple un écran à cristaux liquides, pour afficher le service de destination, information fournie par le système informatique. Préférentiellement, les chariots 200 sont aussi munis d'une mémoire réinscriptible pour enregistrer et fournir, en fonction du service destinataire, les coordonnées de transport, pour que des automates de transport 210 effectuent le transport du chariot jusqu'au service destinataire. Dans cette variante, cette mémoire enregistre aussi les caractéristiques de remise en température des plateaux en fonction des plats et/ou du délai de transport jusqu'à leur destinataire.

Chacun des chariots 200 fournit au système informatique des informations concernant la chaîne du chaud et la chaîne du froid et les dysfonctionnements éventuellement constatés.

Préférentiellement, chaque niveau du chariot 200 est identifié électroniquement et associé au plateau 115 qu'il supporte, lors de son chargement, le système informatique recevant ces informations pour déterminer les instructions de remise en température des plateaux 115 et les transmettre au chariot 200 concerné.

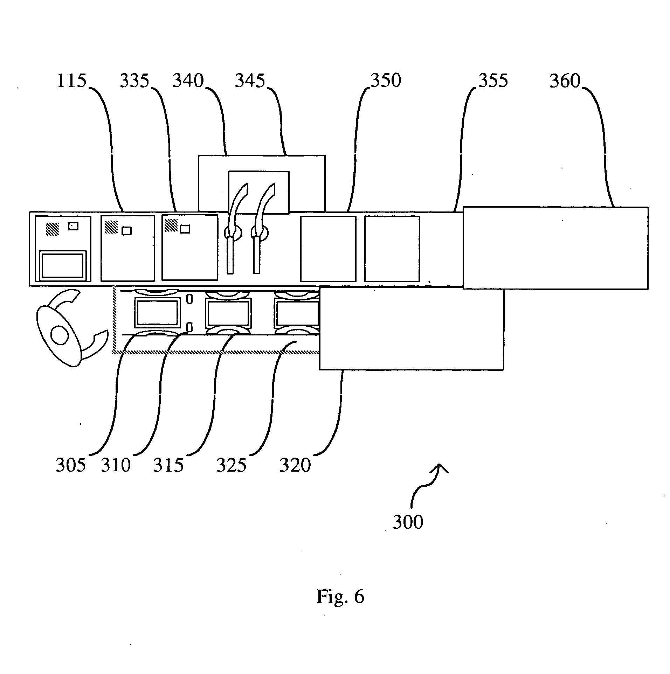

En ce qui concerne la récupération du matériau du corps de la barquette, en variante, on prévoit un module automatique 300 de tri et de lavage des barquettes, illustré en figure 6, pour récupérer ce matériau. On rappelle que la barquette 145 est composée de deux éléments, le film non récupérable et le corps de barquette récupérable, par exemple en polypropylène. Dans ce module additionnel 300, on vide le chariot 200 sur une bande convoyeuse 355, on tient les barquettes 335 par des pinces ou des moyens d'aspiration, on les retourne pour en vider le contenu dans une poubelle, on effectue leur nettoyage par eau, on passe l'eau souillée en centrifugeuse pour récupérer les déchets solides, on nettoie les barquettes avec de la lessive, on passe les barquettes en étuve pour les stériliser, on les sèche à l'air chaud et on libère les barquettes.

Pour ce module additionnel, le système est basé sur
1. Une automatisation de la récupération des plateaux 115 dans les chariots 200 de distribution des repas ;
2. Une récupération semi automatique des barquettes 145 ;
3. Le traitement du dérochage, du lavage, du séchage, de la découpe et du conditionnement en automatique des barquettes ;
4. Un dérochage (terme technique désignant la suppression des déchets résiduels d'une assiette ou d'un plateau) automatique du plateau et
5. Le traitement du lavage et de la désinfection du plateau ainsi que sa récupération en automatique.

En ce qui concerne l'automatisation de la récupération des plateaux, son principe s'appuie sur un équipement identique au module de chargement des chariots, la manutention des chariots pouvant être traitée en manuel ou par le biais des tortues et d'un automate de transport.

Un système de détection, par exemple optique, de présence de plateaux sur les pas du chariot enclenche la procédure de récupération du plateau qui est déposé sur un tapis de transfert bi-cordes. Le balayage des pas du chariot est incrémenté dans l'automate de déchargement qui commande la rotation du chariot pour traiter le cas échéant l'autre compartiment. Après avoir été vidé, le chariot est acheminé manuellement ou automatique vers un tunnel de lavage des chariots.

En ce qui concerne la récupération semi-automatique des barquettes, on rappelle que le polypropylène, composant des corps des barquettes à usage unique, est une matière première dont le coût est en pleine évolution. Ce produit est récupérable sous deux formes : en recyclage après refonte ou sous forme de combustible.

L'intérêt de la récupération réside dans la mise en oeuvre d'un principe de récupération HQE (acronyme de Haute Qualité Environnementale, signifiant qu'il y a une faible consommation d'eau et de produits lessiviels) et avec un besoin en personnel réduit.

Le principe repose dans un premier temps par une opération humaine consistant à :
- séparer le film (opercule) de la barquette, le film n'étant pas récupérable,
- déposer la barquette sur le rail de lavage.

Les opérations de dérochage sont traitées en automatique. La cadence de six plateaux à la minute (soit douze barquettes) est retenu pour une opération manuelle, cette cadence peut être augmentée par l'adjonction d'un deuxième poste de récupération et d'une machine de lavage multi-pistes.

En ce qui concerne le traitement automatique des barquettes et la récupération du polypropylène, au cours d'une première étape, les barquettes sont déposées par l'opérateur et retournées sur un rail de translation. Au cours d'une deuxième étape, lors de l'avancement des barquettes, un mécanisme enclenche une double pince qui vient maintenir la barquette par le rebord, permettant ainsi un lavage par pression à un stade ultérieur.

Le rail de translation avance la barquette pincée au travers d'un ensemble de caisson dont les caractéristiques sont les suivantes :
- Caisson 1 - dérochage de barquettes par jet d'eau sous pression en émulsion avec de l'air comprimé ou dérochage de la barquette par jet d'eau haute pression, l'eau est récupérée, les matières solides sont récupérées par la centrifugation, l'eau est recyclée, en fin de cycle, l'eau est évacuée après désinfection.
- Caisson 2 - désinfection et dégraissage de la barquette par ajout d'un produit adapté dans l'eau, l'eau est filtrée et récupérée en circuit fermé seule une partie de l'eau est récupérée et transférée dans le caisson 1.
- Caisson 3 - étuvage et désinfection de la barquette par injection de vapeur haute pression.
- Caisson 4 - séchage par une turbine d'air chaud.

Le matériel des caissons 2 et 4 est connu dans les tunnels de lavage.

En sortie du caisson 4, les barquettes sont sèches. Elles sont alors engagées dans un laminoir. À ce stade les pinces de blocages des barquettes sont libérées pour mettre l'écrasement du produit, un principe de découpe latérale et horizontale découpe le polypropylène. Le - polypropylène propre et fragmenté est récupéré dans des contenants de stockage et le cas échéant éventuellement pressé pour en réduire le volume.

En ce qui concerne le dérochage automatique du plateau, d'un autre côté, le tapis de translation fait avancer les plateaux sur la cadence variable de six plateaux par minute. Deux bras à projection équipés de ventouse projettent le plateau et permettent un dérochage des reliefs résiduels au-dessus d'un conteneur. Une balayette peut compléter ce dispositif pour en assurer un meilleur nettoyage. Le plateau est ensuite engagé dans un lave plateaux, de type connu, et récupéré en fin de nettoyage sur un chariot à niveau constant.

Ce module additionnel permet la récupération d'une matière première onéreuse tout en optimisant un ensemble de fonctions indispensables qui sont la récupération, le trie et le lavage des plateaux en milieu hospitalier. Une récupération de 80 % des contenants peut être envisagée sur les structures hospitalières monoblocs ou sur les sites satellites.

On observe, en figure 6, en vue de dessus, un schéma de la chaîne 300 de dérochage et de récupération des barquettes. Sont représentés, dans cette figure 6, une pince à barquettes 305 en position relevée, un ergot 310 de fermeture des pinces, actionnant automatique la fermeture des pinces lors de l'avancement de la barquette, un ergot identique libérant la barquette lors de son engagement dans le laminoir, une pince 315 à barquettes en position fermée, un tunnel 320 de lavage au format des barquettes, un rail 325 de translation du mécanisme de dépose et de pince des barquettes, un plateau 115 sur un tapis de translation 355 bi cordes, des résidus 335 sur le plateau, un plateau déroché 350, un conteneur 345 de récupération des déchets, un plateau 340 projeté par des bras à ventouses, le dérochage étant réalisé par gravité et pouvant être complété par un balayage automatique et un tunnel de lavage des plateaux 360.

On a précédemment décrit la préparation de plateaux repas individuels, mais il va de soi que la présente invention concerne aussi la préparation de plateau repas multi portions c'est à dire pour plusieurs personnes. Dans ce cas de figure, il va de soi que les robots et manipulateurs accepteront le format multi portions.

De même on a précédemment décrit la réalisation de plateau repas pour les patients d'un hôpital ou autres centres de soins, mais il va de soi que la présente invention concerne aussi la réalisation de plateaux repas pour cantines et restaurants scolaires ou autres.

## Revendications

1. Dispositif d'automatisation de chaîne de distribution (100) de plateaux repas (115), **caractérisé en ce qu'**il comporte :
- une pluralité de plateaux (115) munis, chacun, d'un moyen d'identification comportant une étiquette électronique,
- une pluralité de chariots (200),
- une chaîne de convoyage (150) des plateaux adaptée à garnir les plateaux de composants de repas et
- un système informatique adapté à associer les plateaux à l'aide des étiquettes électroniques aux chariots pour que chaque plateau soit transporté, dans un chariot, jusqu'à son destinataire.

2. Dispositif selon la revendication 1, **caractérisé en ce que** le système informatique est adapté à remplir des chariots (200) en minimisant le nombre de destinations de chaque chariot.

3. Dispositif selon I une quelconque des revendications 1 ou 2, **caractérisé en ce que** le système informatique est adapté à choisir les contenus (145) des plateaux (115) pour qu'une succession de plateaux soit destinée au même service destinataire.

4. Dispositif selon l'une quelconque des revendications précédentes, **caractérisé en ce que** chaque étiquette électronique comporte une mémoire ré-inscriptible.

5. Dispositif selon l'une quelconque des revendications 1 à 4, **caractérisé en ce que** la chaîne de convoyage comporte un convoyeur pourvu d'emplacements dédiés pour la réception des plateaux et que les moyens d'identification des plateaux (115) sont intégrés aux emplacements dédiés à la réception des plateaux.

6. Dispositif selon la revendication 5, **caractérisé en ce que** les moyens d'identification sont constitués par des étiquettes électroniques.

7. Dispositif selon la revendication 6, **caractérisé en ce que** les étiquettes électroniques comportent chacune une mémoire réinscriptible.

8. Dispositif selon l'une quelconque des revendications 1 à 7, **caractérisé en ce que** le système infc rmatique est adapté à associer chaque plateau (115) à un destinataire et chaque destinataire à une liste de composants (145) à mettre sur le plateau.

9. Dispositif selon l'une quelconque des revendications 1 à 8, **caractérisé en ce que** le système informatique est adapté à associer une carte patient, qui identifie, notamment, les nom et prénom du patient, sa chambre, son lit, son régime alimentaire et/ou le menu choisi à chacun des plateaux.

10. Dispositif selon l'une quelconque des revendications 1 à 9, **caractérisé en ce que** la chaîne de convoyage (150) comporte au moins un lecteur (107) de moyens d'identification des plateaux (115).

11. Dispositif selon l'une quelconque des revendications 1 à 10, **caractérisé en ce que** la chaîne de convoyage (150) est dotée d'automates (120, 125, 135, 140) de distribution de composants (145) sur les plateaux (115) et de moyen de détection d'arrivée de chaque plateau en regard desdits automates, la distribution des composants étant synchronisée en fonction de l'arrivée des plateaux en regard de l'automate.

12. Dispositif selon la revendication 11, **caractérisé en ce que** chaque automate de distribution de composants (145) est comprend d'une part un magasin sous forme de tourelle verticale motorisée en rotation autour d'un axe vertical, cette tourelle verticale comportant un ou plusieurs étages de stockage des composants (145) lesquels sont identifiés par un code apposé sur leur emballage et d'autre part un bras manipulateur multiaxe motorisé doté d'un lecteur apte à lire les codes d'identification des composants et d'un préhenseur d'extrémité, ledit bras manipulateur étant apte à saisir avec le préhenseur qu'il comporte un des composants dans le magasin associé et déposer le dit composant sur le plateau porté par la chaîne de convoyage.

13. Dispositif selon la revendication 12, **caractérisé en ce que** chaque automate de distribution de composants (145) comprend une ligne de translation par famille de produit et un ensemble de chargeurs fixes et linéaires.

14. Dispositif selon l'une quelconque des revendications 1 à 13, **caractérisé en ce que** la chaîne de convoyage (150) est dotée d'au moins un poste de rattrapage (130) comportant un écran d'affichage (155) et le système informatique est adapté, pour au moins une partie des plateaux, à afficher au moins un identifiant de composant à placer sur le prochain plateau arrivant audit poste de rattrapage.

15. Dispositif selon l'une quelconque des revendications 1 à 14, **caractérisé en ce qu'**il comporte des bornes de communication avec des chariots (200) de transport de plate aux et le système informatique est adapté à transmettre auxdits chariots des informations représentatives de leurs chargements.

16. Dispositif selon l'une quelconque des revendications 1 à 15, **caractérisé en ce que** chaque chariot (200) est adapté à effectuer une remise en température des plateaux (115) en fonction des informations représentatives de son chargement.

17. Dispositif selon l'une quelconque des revendications 1 à 16, **caractérisé en ce qu'**il comporte un moyen de chargement automatique (195) de chariots (200).

18. Dispositif selon l'une quelconque des revendications 1 à 17, **caractérisé en ce qu'**il comporte un moyen (210) de changement de chariot (200) adapté, lorsqu'un chariot est rempli, à mettre en place un chariot vide.

19. Dispositif selon l'une quelconque des revendications 1 à 18, **caractérisé en ce qu'**il comporte un moyen de mémorisation de chaque plateau (115) dans chaque chariot (200).

20. Dispositif selon l'une quelconque des revendications 1 à 19, **caractérisé en ce que** le système informatique est adapté à récupérer un plateau (115) sur un chariot (200) en cas de modification d'affectation du patient.

21. Dispositif selon l'une quelconque des revendications 1 à 20, **caractérisé en ce qu'**il comporte un moyen (300) de récupération de barquettes (145) et de lavage des barquettes récupérées.

## Claims

1. A device for automating a distribution line (100) for meal trays (115), **characterized in that** it comprises:
- a number of trays (115), each provided with identification means comprising an electronic label,
- a plurality of carts (200),
- a line for conveying (150) trays designed to fill trays with meal components, and
- a computer system designed to assign the trays by means of the electronic labels to the carts such that each tray is transported, in a cart, to its recipient.

2. A device according to claim 1, wherein the computer system is designed to fill carts (200) by minimising the number of destinations of each cart.

3. A device according to any of claims 1 or 2, wherein the computer system is designed to select the contents (145) of the trays (115) such that a series of trays is destined for the same service section.

4. A device according to any preceding claim, **characterized in that** each electronic label includes a rewritable memory.

5. A device according to any of claims 1 to 4, **characterised in that** the conveyor line comprises a conveyor provided with dedicated positions for receiving trays, and **in that** the means for identifying the trays (115) are integral with the positions dedicated to receiving the trays.

6. A device according to claim 5, **characterised in that** the means for identification comprise electronic labels.

7. A device according to claim 6, **characterised in that** the electronic labels each comprise a rewritable memory.

8. A device according to any of claims 1 to 7, **characterised in that** the computer system is designed to associate each tray (115) to a recipient and each recipient to a list of components (145) to place on the tray.

9. A device according to any of claims 1 to 8, **characterised in that** the computer system is designed to associate a patient card, which identifies in particular the first and last names of the patient, his room, his bed, his diet and/or the menu that is selected for each of the trays.

10. A device according to any of claims 1 to 9, **characterised in that** the conveyor line (150) comprises at least one reader (107) of means of identification of the trays (115).

11. A device according to any of claims 1 to 11, **characterised in that** the conveyor line (150) is equipped with automatic devices (120, 125, 135, 140) for distributing components (145) on the trays (115) and with means for detecting when each tray arrives with regard to said automatic devices, the distribution of the components being synchronized based on when the trays arrive with regard to the automatic device.

12. A device according to claim 11, **characterised in that** each automatic device for distributing components (145) comprises, on the one hand, a storage unit in the form of a vertical turret driven in rotation around a vertical axis, said vertical turret comprising one or more stages of storing components (145), which are identified by a code posited on their packaging and, on the other hand, a motorized multi-axis manipulating arm equipped with a reader able to read codes for identifying the components and an end gripper, said manipulating arm is being able with said gripper it comprises to grip one of the components in the assigned storage unit and to place said component on the tray carried by the conveyor line.

13. A device according to claim 12, **characterised in that** each automatic device for distributing components (145) comprises a translation line per family of product and a set of stationary and linear loaders.

14. A device according to any of claims 1 to 13, **characterised in that** the conveyor line (150) is equipped with at least one recovery station (130) comprising a display screen (155), and the computer system is designed to display, for at least a portion of the trays, at least one component identifier to be placed on the next tray that arrives at said recovery station.

15. A device according to any of claims 1 to 14, **characterised in that** it comprises communication terminals with tray transport carts (200), and the computer system is designed to transmit to said carts data representative of their loads.

16. A device according to any of claims 1 to 15, **characterised in that** each cart (200) is designed to bring products of trays (115) back to a temperature based on data representative of the load thereof.

17. A device according to any of claims 1 to 16, **characterised in that** it comprises a means for automatic loading (195) of carts (200).

18. A device according to any of claims 1 to 17, **characterised in that** it comprises means (210) for changing the cart (200) that is designed, when a cart is filled, to install an empty cart.

19. A device according to any of claims 1 to 18, **characterised in that** it comprises a means for memorization of each tray (115) in each cart (200).

20. A device according to any of claims 1 to 20, **characterised in that** the computer system is designed to recover a tray (115) on a cart (200) in the event of a change to the assignment of the patient.

21. A device according to any of claims 1 to 21, **characterised in that** it comprises a means (300) for recovery of small containers (145) and for washing recovered small containers.

## Patentansprüche

1. Vorrichtung zur Automatisierung einer Verteilerkette (100) für Speisetabletts (115),
**dadurch gekennzeichnet, dass** sie umfasst:
- mehrere Tabletts (115), von denen jedes mit einer Identifizierungseinrichtung ausgestattet ist, die ein elektronisches Etikett umfasst,
- mehrere Wagen (200),
- eine Förderkette (150) für die Tabletts, um die Tabletts mit Mahlzeitbestandteilen zu belegen und
- ein Informatiksystem, das die Tabletts mit Hilfe der elektronischen Etiketten den Wagen zuordnet, so dass jedes Tablett in einem Wagen bis zu seinem Empfänger transportiert wird.

2. Vorrichtung nach Anspruch 1, **dadurch gekennzeichnet, dass** das Informatiksystem dazu ausgelegt ist, die Wagen (200) zu füllen und dabei die Anzahl der Bestimmungsorte jedes Wagens möglichst gering zu halten.

3. Vorrichtung nach einem der Ansprüche 1 oder 2, **dadurch gekennzeichnet, dass** das Informatiksystem dazu ausgelegt ist, die Inhalte (145) der Tabletts (150) auszuwählen, so dass eine Folge von Tabletts für die gleiche Empfängerabteilung bestimmt ist.

4. Vorrichtung nach einem der vorstehenden Ansprüche, **dadurch gekennzeichnet, dass** jedes elektronische Etikett einen wiederbeschreibbaren Speicher umfasst.

5. Vorrichtung nach einem der Ansprüche 1 bis 4, **dadurch gekennzeichnet, dass** die Förderkette eine Fördereinrichtung umfasst, die mit Bereichen zur Aufnahme der Tabletts ausgestattet ist, und dass die Identifizierungseinrichtungen der Tabletts (115) in die Bereiche zur Aufnahme der Tabletts integriert sind.

6. Vorrichtung nach Anspruch 5, **dadurch gekennzeichnet, dass** die Identifizierungseinrichtungen aus elektronischen Etiketten gebildet sind.

7. Vorrichtung nach Anspruch 6, **dadurch gekennzeichnet, dass** jedes der elektronischen Etiketten einen wiederbeschreibbaren Speicher enthält.

8. Vorrichtung nach einem der Ansprüche 1 bis 7, **dadurch gekennzeichnet, dass** das Informatiksystem dazu ausgelegt ist, jedes Tablett (115) einem Empfänger und jeden Empfänger einer Liste von auf das Tablett zu legenden Bestandteilen (145) zuzuordnen.

9. Vorrichtung nach einem der Ansprüche 1 bis 8, **dadurch gekennzeichnet, dass** das Informatiksystem dazu ausgelegt ist, jedem der Tabletts eine Patientenkarte zuzuordnen, die insbesondere den Namen und Vornamen des Patienten, sein Zimmer, sein Bett, seine Diät und/oder sein gewähltes Menü identifiziert.

10. Vorrichtung nach einem der Ansprüche 1 bis 9, **dadurch gekennzeichnet, dass** die Förderkette (150) mindestens ein Lesegerät (107) für die Identifizierungseinrichtungen der Tabletts (115) enthält.

11. Vorrichtung nach einem der Ansprüche 1 bis 10, **dadurch gekennzeichnet, dass** die Förderkette (150) mit Automaten (120, 125, 135, 140) zum Verteilen der Bestandteile (145) auf die Tabletts (115) und mit Einrichtung zur Erkennung der Ankunft jedes Tabletts in Bezug auf die Automaten versehen ist, wobei die Verteilung der Bestandteile in Abhängigkeit der Ankunft der Tabletts in Bezug auf den Automaten synchronisiert ist.

12. Vorrichtung nach Anspruch 11, **dadurch gekennzeichnet, dass** jeder Automat zur Verteilung von Bestandteilen (145) einerseits ein Magazin umfasst in Form eines vertikalen Türmchens, das um eine vertikale Achse in Rotationsrichtung motorisiert ist, wobei das vertikale Türmchen eine oder mehrere Etagen zur Lagerung der Bestandteile (145) aufweist, welche durch einen auf ihrer Verpackung angefügten Code identifiziert sind, und andererseits einen multiaxial motorisierten Betätigungsarm umfasst, der mit einem Lesegerät zum Lesen der Identifizierungscodes und mit einem Endgreifer ausgestattet ist, wobei der Betätigungsarm dazu geeignet ist, einen der Bestandteile in dem entsprechenden Magazin mittels des ihm zugehörigen Greifers zu ergreifen und das Bestandteil auf dem von der Förderkette getragenen Tablett abzusetzen.

13. Vorrichtung nach Anspruch 12, **dadurch gekennzeichnet, dass** jeder Automat zur Verteilung von Bestandteilen (145) eine Bewegungslinie pro Produktfamilie und eine Gruppe von feststehenden, linearen Ladern umfasst.

14. Vorrichtung nach einem der Ansprüche 1 bis 13, **dadurch gekennzeichnet, dass** die Förderkette (150) mit mindestens einer Nachholstation (130) versehen ist, die einen Anzeigebildschirm (155) umfasst, und das Informatiksystem für zumindest einen Teil der Tabletts dazu ausgelegt ist, mindestens einen Identifikator eines Bestandteils anzuzeigen, welches auf das nächste an der Nachholstation ankommende Tablett zu platzieren ist.

15. Vorrichtung nach einem der Ansprüche 1 bis 14, **dadurch gekennzeichnet, dass** sie Stationen zur Kommunikation mit den Tabletttransportwagen (200) umfasst und das Informatiksystem dazu ausgelegt ist, repräsentative Informationen zur Beladung der Wagen an diese zu übermitteln.

16. Vorrichtung nach einem der Ansprüche 1 bis 15, **dadurch gekennzeichnet, dass** jeder Wagen (200) dazu ausgelegt ist, eine Wiedereinstellung der Temperatur der Tabletts (115) durchzuführen in Abhängigkeit der seine Ladung betreffenden Informationen.

17. Vorrichtung nach einem der Ansprüche 1 bis 16, **dadurch gekennzeichnet, dass** sie eine Einrichtung (195) zum automatischen Beladen der Wagen (200) umfasst.

18. Vorrichtung nach einem der Ansprüche 1 bis 17, **dadurch gekennzeichnet, dass** sie eine Wagenauswechseleinrichtung (210) zum Einstellen eines leeren Wagens, wenn ein Wagen gefüllt ist, umfasst.

19. Vorrichtung nach einem der Ansprüche 1 bis 18, **dadurch gekennzeichnet, dass** sie eine Einrichtung zur Datenspeicherung für jedes Tablett (115) in jedem Wagen (200) umfasst.

20. Vorrichtung nach einem der Ansprüche 1 bis 19, **dadurch gekennzeichnet, dass** das Informatiksystem dazu ausgelegt ist, ein Tablett (115) im Falle einer Änderung der Zuordnung zum Patienten aus einem Wagen (200) zurückzuholen.

21. Vorrichtung nach einem der Ansprüche 1 bis 20, **dadurch gekennzeichnet, dass** sie eine Vorrichtung (300) zur Wiederbeschaffung von Körbchen (145) und zur Reinigung der wiederbeschafften Körbchen umfasst.
